# EUROPEAN PATENT SPECIFICATION

(11) **EP 2 706 210 B1**
(45) Date of publication and mention of the grant of the patent: **22.10.2014**
(21) Application number: 13183450.9
(22) Date of filing: 06.09.2013
(51) Int. Cl.: F02B 31/08, F02M 25/07, F02M 35/10, F02M 35/116

(54) **Intake manifold with shutter device for an internal combustion engine**
Ansaugkrümmer mit Verschlusselement für eine Brennkraftmaschine
Collecteur d'admission avec dispositif d'obturation pour un moteur à combustion interne

(30) Priority: 06.09.2012 IT BO20120473
(43) Date of publication of application: 12.03.2014
(73) Proprietor: Magneti Marelli S.p.A., Corbetta (MI) (IT)
(72) Inventor: Schiavina, Giampaolo, 40133 BOLOGNA (IT); Musolesi, Stefano, 40122 BOLOGNA (IT); Tartari, Stefano, 40033 CASALECCHIO DI RENO (IT); Bellato, Nazario, 40131 BOLOGNA (IT); Di Meo, Alfonso, 70033 CORATO (IT)
(74) Representative: Maccagnan, Matteo

(56) References cited:
- EP-A2- 1 801 382
- DE-A1- 3 240 196
- DE-A1- 3 711 859
- DE-A1- 19 933 030
- US-A1- 2008 295 813
- US-B1- 6 308 686

## Description

### TECHNICAL FIELD

The present invention relates to an intake manifold with a shutter device for an internal combustion engine.

### PRIOR ART

An internal combustion engine is provided with an intake duct which takes fresh air from the external environment to feed the same fresh air to an intake manifold which in turn distributes the air to the different cylinders by means of respective intake ducts. A throttle valve is arranged at the inlet of the intake manifold which is actuated to adjust the flow of air which enters the intake manifold.

In modern internal combustion engines, the intake manifold increasingly has a variable geometry, i.e. it is provided with a shutter device, which varies the cross sectional area of the air of the intake ducts according to the engine speed (i.e. the angular speed of rotation of the driving shaft) to increase engine performance while simultaneously reducing polluting emissions. At reduced speeds, the cross sectional area of the air through the intake ducts is decreased so as to generate swirls in the intake air flow which improve the mixture between air and fuel; all the fuel injected is burned due to the presence of these swirls which improve the mixture, and hence the polluting emissions generated by the combustion are reduced. At high speeds, the cross sectional area of the air through the intake ducts is maximized so as to allow the cylinders to be completely filled and hence allow the generation of the maximum power possible.

A shutter device that varies the cross sectional area of the air of the intake ducts may be of the tumble or swirl type. A tumble type shutter device uses, for each intake duct, a shutter body which is movable between an active (or shut) position, in which the shutter body decreases the cross section of the intake duct, and a resting position (or maximum aperture), in which the shutter body does not determine any reduction of the cross sectional area of the air of the intake duct. A swirl type shutter device provides that each intake duct comprises two channels and uses, for each intake duct, a shutter body inserted in one of the two channels and which is movable between the active position, in which the shutter body completely closes the corresponding channel, and a resting position (or maximum aperture), in which the shutter body does not determine any significant reduction of the cross sectional area of the air of the corresponding channel.

Patent Application DE3240196A1 depicts the closest state of the art and describes an intake manifold with a shutter device for an internal combustion engine.

### DESCRIPTION OF THE INVENTION

The object of the present invention is to provide an intake manifold with a shutter device for an internal combustion engine, which intake manifold is easy and affordable to make and at the same time has increased reliability over time.

According to the present invention, an intake manifold is provided with a shutter device for an internal combustion engine, as claimed by the appended claims.

### BRIEF DESCRIPTION OF THE DRAWINGS

The present invention will now be described with reference to the accompanying drawings, which illustrate a non-limiting embodiment thereof, in which:
- figure 1 is a diagrammatic view of an internal combustion engine provided with an intake manifold with a shutter device made in accordance with the present invention;
- figure 2 is a perspective view of the intake manifold in figure 1;
- figure 3 is a perspective view, partially cross-sectioned and with parts removed for clarity, of the intake manifold in figure 1;
- figure 4 is a perspective view of a component of the intake manifold in figure 1;
- figure 5 is an exploded perspective view, and with parts removed for clarity, of the intake manifold in figure 1;
- figure 6 is a perspective view of an EGR introduction duct of the intake manifold in figure 1; and
- figure 7 is a top view of the EGR introduction duct in figure 6.

### PREFERRED EMBODIMENTS OF THE INVENTION

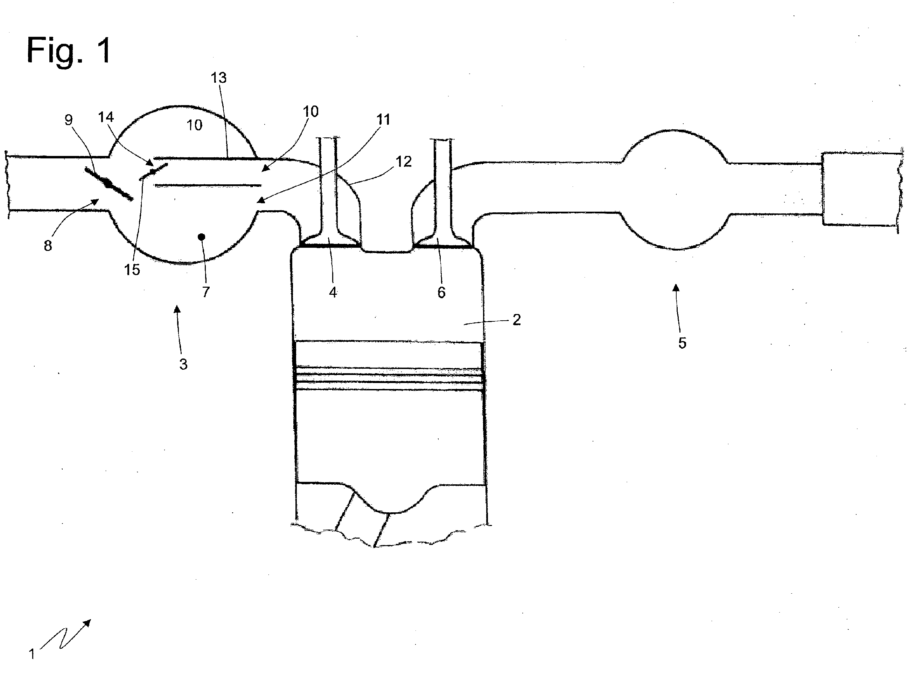

Numeral 1 in figure 1 indicates an internal combustion engine as a whole provided with six "V" cylinders 2 (only one of which is shown in figure 1), each of which is connected to an intake manifold 3 by means of two intake valves 4 (only one of which is shown in figure 1) and to an exhaust manifold 5 by means of two exhaust valves 6 (only one of which is shown in figure 1).

Defined in the intake manifold 3 is the intake chamber 7 (the so-called plenum), which receives fresh air (i.e. air coming from the external environment) through an inlet opening 8 adjusted by a main throttle valve 9, and communicates with each cylinder 2 through two twin side-by-side outlet openings 10 and 11 which end in two respective intake ducts 12 (only one of which is diagrammatically shown in figure 1) ending at the two intake valves 4. In each cylinder 2, the corresponding outlet opening 10 ends in a first intake duct 12 coupled to a first intake valve 4 and the corresponding outlet opening 11 ends in a second intake duct 12 which is coupled to a second intake valve 4 and is separate from and side-by-side the first intake duct 12. In other words, the two twin and side-by-side outlet openings 10 and 11 each feed a corresponding intake valve 6 in each cylinder 2.

Each outlet opening 11 is free, i.e. directly communicates with the intake chamber 7 without any type of "obstacle" or "limitation"; contrarily, each outlet opening 10 can be shut because it communicates with the intake chamber 7 only through a feeding channel 13 (common to all the shut outlet openings 10), which originates inside the intake chamber 7 at a (single) air intake 14 and adjusted by a shutter throttle valve 15. In other words, the intake manifold 3 comprises a single feeding channel 13, which is completely arranged inside the intake chamber 7, originates at the (only) air intake 14 (obviously arranged inside the intake chamber 7) adjusted by a shutter throttle valve 15 and ends in the six shutter outlet openings 10 (i.e. it ends at each shutter outlet opening 10).

Therefore, the fresh air which arrives inside the intake chamber 7 of the intake manifold 3 may flow towards the cylinders 2 through the six free outlet openings 11 without any impediment or obstacle. Instead, the air which arrives inside the intake chamber 7 of the intake manifold 3 may flow towards the cylinders 2 through the six shut outlet openings 10 only according to the degree of aperture of the shutter throttle valve 15 which adjusts the air intake 14 of the feeding channel 13; for example, if the shutter throttle valve 15 completely closes the air intake 14 of the feeding channel 13, the feeding channel 13 and the six shut outlet openings 10 are isolated from the intake chamber 7 and hence no air flow flows through the six shut outlet openings 10 towards the cylinders 2.

Summarizing, the feeding channel 13, together with the throttle valve 15, constitutes a shutter device, which during the operation of the internal combustion engine 1, is adapted to vary the overall cross sectional area of the air towards the cylinders 2 so that the overall cross sectional area of the air towards the cylinders 2 is smaller at low speeds (to increase the swirl and hence promote the mixture of the fuel with the fresh air) and is larger at high speeds (to increase the power generated).

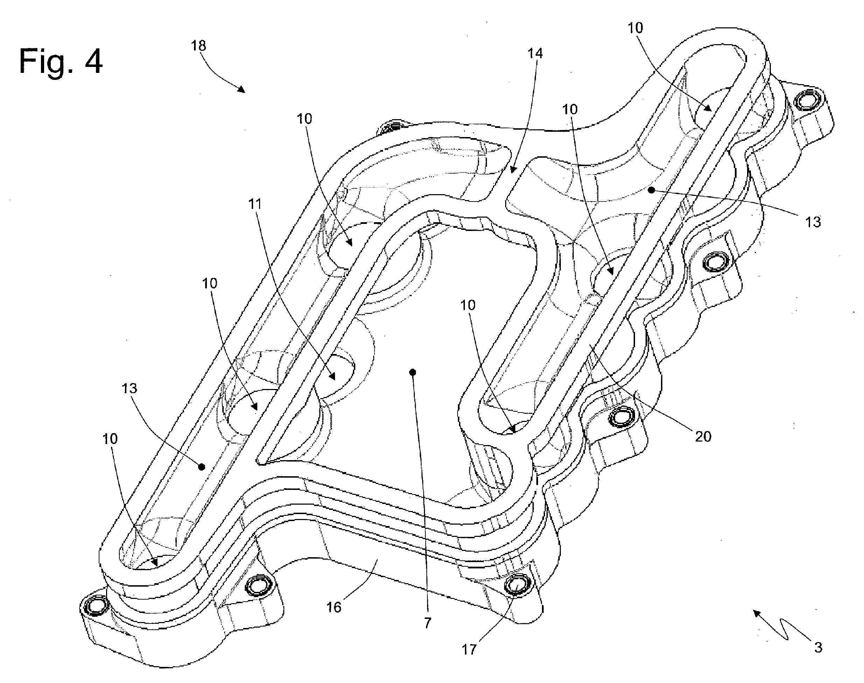

As clearly visible in figure 4, the feeding channel 13 bifurcates immediately downstream of the air intake 14 and divides into two distinct branches, each of which communicates with the shut outlet openings 10 of a same bank of cylinders 2.

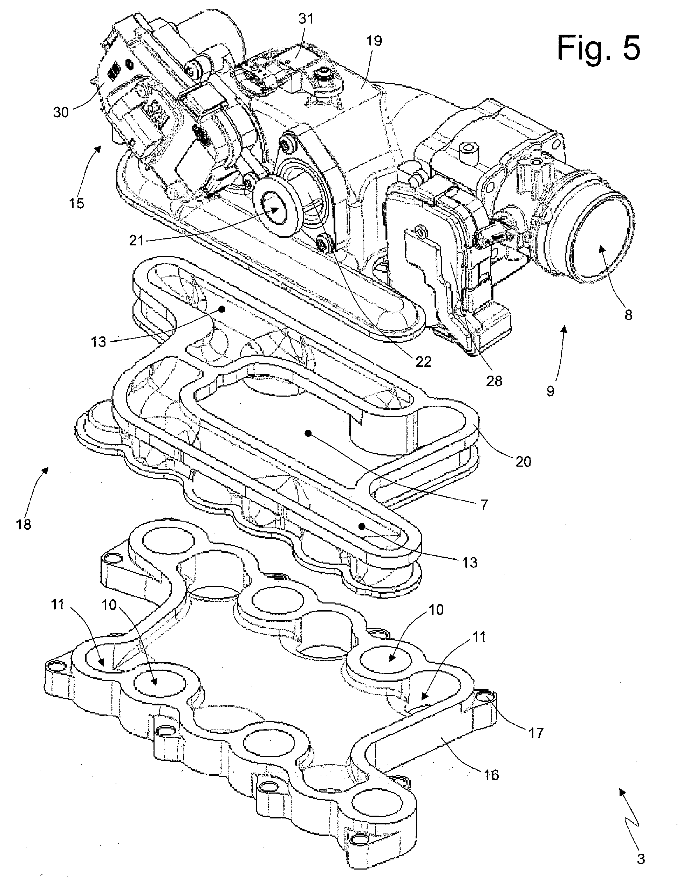

As shown in figure 5, the intake manifold 3 comprises an assembly plate 16 which can be mechanically connected to a head of the cylinders 2 to provide the mechanical and pneumatic connection between the intake manifold 3 and the head of the cylinders 2. The shut outlet openings 10 and the free outlet openings 11 are obtained through the assembly plate 16 in such a way that each shut outlet opening 10 is arranged next to the corresponding free outlet opening 11. The assembly plate 16 has, along the outer perimeter, a plurality of through holes 17, each of which is adapted to receive a screw, which is screwed into the head of the cylinders 2.

Furthermore, the intake manifold 3 comprises an internally hollow shell 18, which has the inlet opening 8, comprises the feeding channel 13, and is fixed to the assembly plate 16 so as to delimit, together with the assembly plate 16, the intake chamber 7; in other words, the intake chamber 7 is delimited at the top and side by shell 18 and is delimited at the bottom by the assembly plate 16. Shell 18 consists of an upper part 19 and a lower part 20, which are joined together. The lower part 20 of shell 18 is directly connected to the assembly plate 16 and comprises a lower portion (i.e. a bottom half) of the feeding channel 13, while the upper part 19 of shell 18 has the inlet opening 8 and comprises an upper portion (i.e. a top half) of the feeding channel 13.

Preferably, the two parts 19 and 20 of shell 18 are joined together by means of welding; alternatively, the two parts 19 and 20 of shell 18 could be joined together by means of gluing. Similarly, shell 18 (i.e. the bottom part 20 of shell 18) is joined to the assembly plate 16 by means of welding; alternatively, shell 18 (i.e. the bottom part 20 of shell 18) could be joined to the assembly plate 16 by means of gluing.

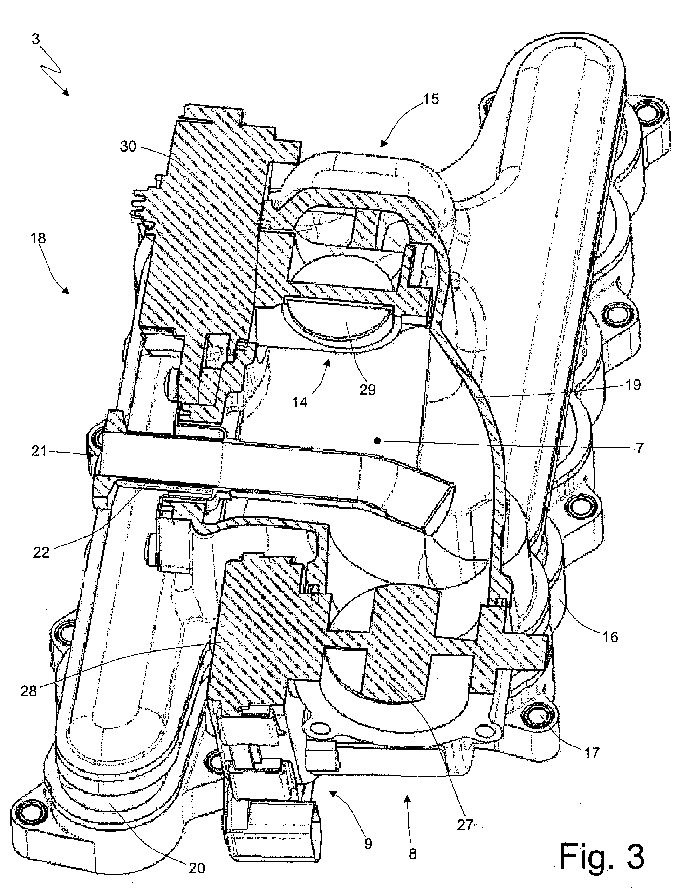

According to a preferred embodiment seen in figure 3, the air intake 14 is arranged parallel and facing the inlet opening 8. Furthermore, the intake chamber 7 is provided with an inlet opening 21 (obtained through the upper part 19 of shell 18), through which exhaust gases (originating from an EGR duct) are fed into the intake chamber 7. Preferably, the inlet opening 21 is arranged between the inlet opening 8 and the air intake 14; thereby, it is possible to better mix the exhaust gases in the air which is sucked inside the intake chamber 7, and it is especially possible to uniformly distribute the exhaust gases in the air which flows through the shut outlet openings 10 and in the air which flows through the free outlet openings 11. To further improve the uniform distribution of the exhaust gases, the inlet opening 21 is connected to an introduction duct 22, which extends inside the intake chamber 7 and leads to an area of the intake chamber 7, which is comprised between the inlet opening 8 and the air intake 14.

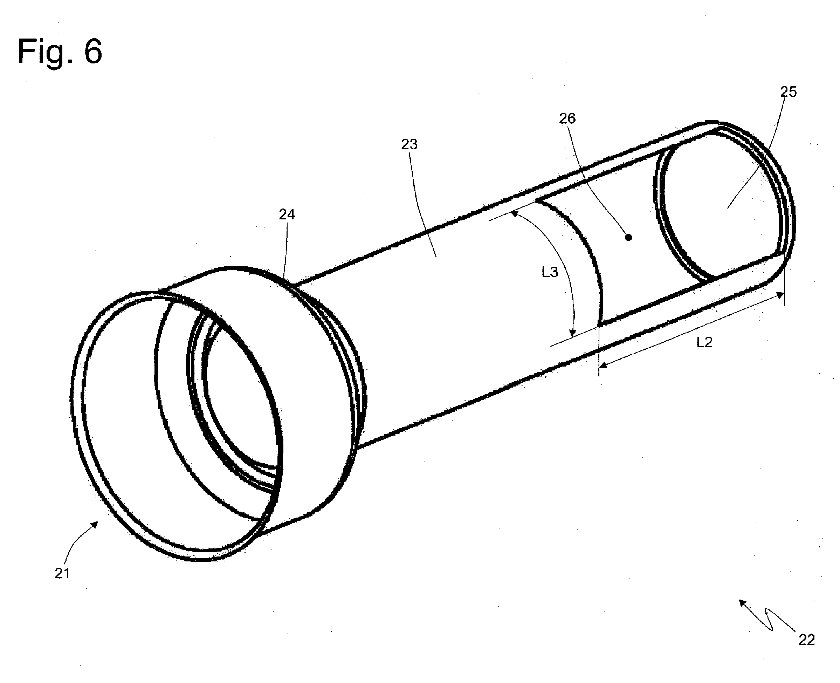

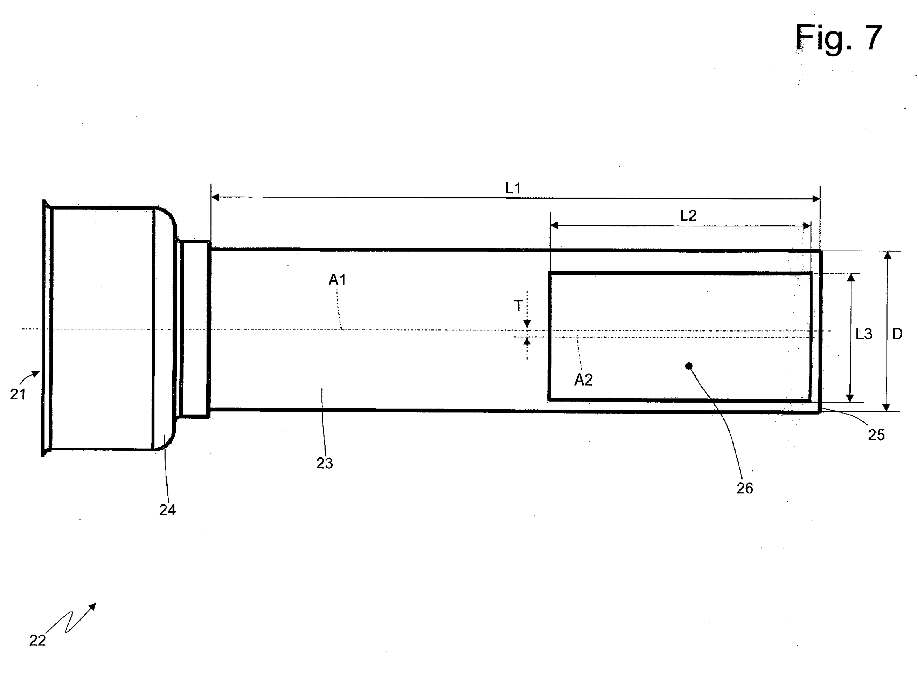

As shown in figures 6 and 7, the introduction duct 22 comprises a cylinder-shaped tubular body 23, which, at one end, is connected to the inlet opening 21 by means of a connector 24 (the inlet opening 21 has a larger diameter with respect to the tubular body 23 and hence the connector has a variable diameter) and, at the opposite end, is closed by a bottom wall 25. As shown in figure 7, the tubular body 23 has an axial dimension L1 (i.e. parallel to the longitudinal axis A1 of the tubular body 23) and a diameter D. As shown in figures 6 and 7, the lateral surface of the tubular body 23 has a single (i.e. only one) through hole 26 which constitutes an introduction opening, through which the exhaust gases (which entered the tubular body 23 through the inlet opening 21) flow into the intake chamber 7. The through hole 26 is, in plan view, rectangular in shape (seen in figure 7) and has an axial dimension L1 (i.e. parallel to the longitudinal axis A1 of the tubular body 23) and a circumferential diameter L3 (i.e. measured along the circumference of the tubular body 23).

Surprisingly, it has been observed that it is possible to obtain an optimal introduction of exhaust gases in the intake chamber 7 if the through hole 26 is shifted towards the bottom wall 25 (i.e. if it is arranged in the half of the tubular body 23 that is closer to the bottom wall 25 and thus farther from the inlet opening 21), if the ratio between the circumferential dimension L3 of the through hole 26 and the axial dimension L2 of the through hole 26 ranges between 0.4 and 0.5, and if there is a misalignment T between the projection of the longitudinal axis A1 of the tubular body 23 and the longitudinal middle axis A2 of the through hole 26 (preferably, misalignment T between the projection of the longitudinal axis A1 of the tubular body 23 and the longitudinal middle axis A2 of the through hole 26 is equal to 25% of diameter D of the tubular body 23). In particular, the axial dimension L2 of the through hole 26 is smaller than half of the axial dimension L1 of the tubular body 23 and the through hole 26 is completely arranged in the half of the tubular body 23 that is closer to the bottom wall 25 and, thus, farther from the inlet opening 21.

According to a preferred embodiment seen in figure 3, the main throttle valve 9 comprises a single throttle 27, which is mounted so as to rotate, and an actuating device 28, which causes throttle 27 to rotate and is arranged outside shell 18. In particular, the actuating device 28 is accommodated in a box which is provided with a cover and is fixed (typically by means of screws) to shell 18. Similarly, the shutter throttle valve 15 comprises a single throttle 29, which is mounted to rotate, and an actuating device 30, which causes throttle 29 to rotate and is arranged outside shell 18. In particular, the actuating device 30 is accommodated in a box which is provided with a cover and is fixed (typically by means of screws) to shell 18.

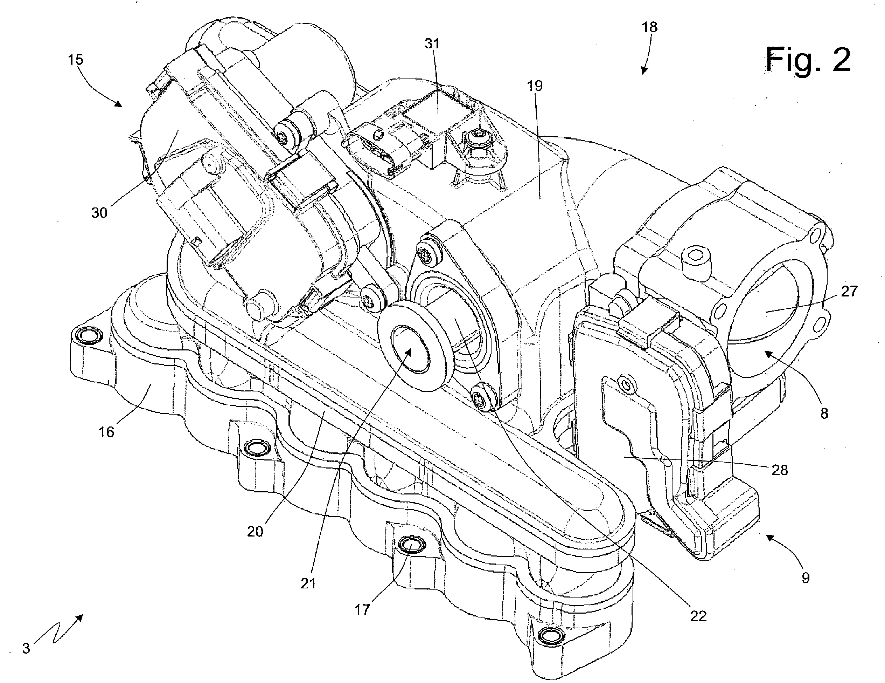

As shown in figures 2 and 5, the intake manifold 3 comprises a pressure sensor 31 which is arranged between the inlet opening 8 and the air intake 14; such a positioning of the pressure sensor 31 is optimal because it allows a particularly accurate and reliable measurement of the pressure to be obtained, for the purposes of monitoring the engine.

The above-described intake manifold 3 has several advantages.

Firstly, the above-described intake manifold 3 is simple and affordable to make, because it has a single shutter throttle valve 15 which is common to all cylinders 2. Furthermore, both the actuating devices 28 and 30 of the throttle valves 9 and 15 in the above-described intake manifold 3 are arranged on the side opposite to the intake manifold 3 with respect to the cylinders 2, i.e. they are relatively far from the hottest point of the internal combustion engine 1; thereby, it is easier to keep the temperature of the actuating devices 28 and 30 adequately low, to the complete benefit of the reliability of the actuating devices 28 and 30 over time.

Finally, the above-described intake manifold 3 is extremely compact, i.e. has a very small overall volume and weight. Thereby, the above-described intake manifold 3 has a minimum volume and maximum possibility of being integrated inside the engine compartment of a vehicle.

## Claims

1. An intake manifold (3) with a shutter device for an internal combustion engine (1) provided with at least one cylinder (2); the intake manifold (3) comprises:
an intake chamber (7), which is provided with a first inlet opening (8), through which fresh air is fed into the intake chamber (7), and is provided, for each cylinder (2), with a shut outlet opening (10) and with a free outlet opening (11), which feed fresh air to the cylinder (2);
a main throttle valve (9), which is arranged in correspondence to the first inlet opening (8) and adjusts the cross sectional area of the first inlet opening (8);
a feeding channel (13), which originates inside the intake chamber (7) in correspondence to an air intake (14) arranged parallel and facing the first inlet opening (8) and ends at each shut outlet opening (10); and
a shutter throttle valve (15), which is arranged at the air intake (14) and adjusts the cross sectional area of the air intake (14);
an assembly plate (16), which can be mechanically connected to a head of the cylinders (2) and through which the shut outlet openings (10) and the free outlet openings (11) are obtained in such a way that each shut outlet opening (10) is arranged next to the corresponding free outlet opening (11); and
an internally hollow shell (18), which presents the first inlet opening (8), comprises the feeding channel (13), and is fixed to the assembly plate (16) so as to delimit, together with the assembly plate (16), the intake chamber (7);
the intake manifold (3) is **characterised in that** it comprises:
the intake chamber (7) is provided with a third inlet opening (21), through which exhaust gases are fed into the intake chamber (7);
the third inlet opening (21) is arranged between the first inlet opening (8) and the air intake (14);
the third inlet opening (21) is connected to an introduction duct (22), which extends inside the intake chamber (7) and leads to an area of the intake chamber (7), which is comprised between the first inlet opening (8) and the air intake (14);
the introduction duct (22) comprises a cylinder-shaped tubular body (23), which, at one end, is connected to the inlet opening (21) and, at the opposite end, is closed by a bottom wall (25); and
the lateral surface of the tubular body (23) has a through hole (26) which, in plan view, is rectangular in shape and constitutes an introduction opening, through which the exhaust gases flow into the intake chamber (7).

2. An intake manifold (3) according to claim 1, wherein the assembly plate (16) presents, along the outer perimeter, a plurality of through holes (17), each of which is suited to receive a screw, which is screwed into the head of the cylinders (2).

3. An intake manifold (3) according to claim 1 or 2, wherein:
the shell (18) consists of an upper part (19) and a lower part (20), which are joined together;
the lower part (20) of the shell (18) is directly connected to the assembly plate (16) and comprises a lower portion of the feeding channel (13); and
the upper part (19) of the shell (18) has the first inlet opening (8) and comprises an upper portion of the feeding channel (13).

4. An intake manifold (3) according to claim 1, 2 or 3, and comprising a pressure sensor (31) which is arranged between the first inlet opening (8) and the air intake (14).

5. An intake manifold (3) according to any of the claims from 1 to 4, wherein the through hole (26) is shifted towards the bottom wall (25) and is arranged in the half of the tubular body (23) that is closer to the bottom wall (25) and, thus, farther from the inlet opening (21).

6. An intake manifold (3) according to any of the claims from 1 to 5, wherein the ratio between a circumferential dimension L(3) of the through hole (26) and an axial dimension L(2) of the through hole (26) ranges between 0.4 and 0.5.

7. An intake manifold (3) according to any of the claims from 1 to 6, wherein there is a misalignment (T) between the projection of the longitudinal axis (A1) of the tubular body (23) and the longitudinal middle axis (A2) of the through hole (26).

8. An intake manifold (3) according to claim 7, wherein the misalignment (T) between the projection of the longitudinal axis (A1) of the tubular body (23) and the longitudinal middle axis (A2) of the through hole (26) is equal to 25% of the diameter (D) of the tubular body (23).

9. An intake manifold (3) according to any of the claims from 1 to 8, wherein the main throttle valve (9) comprises a single throttle (27), which is mounted so as to rotate, and an actuating device (28), which causes the throttle (27) to rotate and is arranged outside of the shell (18).

10. An intake manifold (3) according to any of the claims from 1 to 9, wherein the shutter throttle valve (15) comprises a single throttle (29), which is mounted to rotate, and an actuating device (30), which causes the throttle (29) to rotate and is arranged outside of the shell (18).

11. An intake manifold (3) according to any of the claims from 1 to 10, wherein the feeding channel (13) bifurcates immediately downstream of the air intake (14) into two distinct branches, each of which communicates with the shut outlet openings (10) of a same bank of cylinders (2).

## Patentansprüche

1. Einlasskrümmer (3) mit einer Verschlusseinrichtung für einen Verbrennungsmotor (1), der mit mindestens einem Zylinder (2) versehen ist, wobei der Einlasskrümmer (3) umfasst:
eine Einlasskammer (7), die mit einer ersten Einlassöffnung (8) versehen ist, durch welche Frischluft der Einlasskammer (7) zugeführt wird, und für jeden Zylinder (2) mit einer Verschluss-Auslassöffnung (10) und
mit einer freien Auslassöffnung (11) versehen ist, welche dem Zylinder (2) Frischluft zuliefern;
eine Hauptdrosselklappe (9), die der ersten Einlassöffnung (8) entsprechend angeordnet ist und die Querschnittsfläche der ersten Einlassöffnung (8) einstellt;
einen Zulieferkanal (13), der innerhalb der Einlasskammer (7) in Übereinstimmung mit einem Lufteinlass (14) seinen Ursprung hat, der der ersten Einlassöffnung (8) gegenüberliegend und parallel dazu angeordnet ist und an jeder der Verschluss-Auslassöffnungen (10) endet; und
eine Verschluss-Drosselklappe (15), die an dem Lufteinlass (14) angeordnet ist und die
Querschnittsfläche des Lufteinlasses (14) einstellt;
eine Montageplatte (16), die mit einem Kopf der Zylinder (2) mechanisch verbunden werden kann und durch welche die Verschluss-Auslassöffnungen (10) und die freien Auslassöffnungen (11) dergestalt erhalten werden, dass jede Verschluss-Auslassöffnung (10) neben der entsprechenden freien Auslassöffnung (11) angeordnet ist;
und
eine innen hohle Schale (18), welche die erste Einlassöffnung (8) darstellt, den Zulieferkanal (13) aufweist und an der Montageplatte (16) befestigt ist, so dass sie zusammen mit der Montageplatte (16) die Einlasskammer (7) begrenzt;
wobei der Einlasskrümmer (3) **dadurch gekennzeichnet ist,**
**dass** er aufweist:
die Einlasskammer (7) ist mit einer dritten Einlassöffnung (21) versehen, durch welche Abgase in die Einlasskammer (7) zugeführt werden;
die dritte Einlassöffnung (21) ist zwischen der ersten Einlassöffnung (8) und dem Lufteinlass (14) angeordnet;
die dritte Einlassöffnung (21) ist mit einer Einführleitung (22) verbunden, welche innerhalb der Einlasskammer (7) verläuft und zu einem Bereich der Einlasskammer (7) führt, der zwischen der ersten Einlassöffnung (8) und dem Lufteinlass (14) besteht;
die Einführleitung (22) umfasst einen zylinderförmigen Rohrkörper (23), welcher an einem Ende mit der Einlassöffnung (21) verbunden ist und an dem entgegengesetzten Ende durch eine Bodenwand (25) verschlossen ist; und
die Seitenfläche des Rohrkörpers (23) hat eine Durchgangsöffnung (26), welche in der Draufsicht eine rechteckige Form hat und eine Einführöffnung bildet, durch welche die Abgase in die Einlasskammer (7) strömen.

2. Einlasskrümmer (3) nach Anspruch 1, wobei die Montageplatte (16) entlang dem äußeren Umfang eine Vielzahl von Durchgangsöffnungen (17) aufweist, von welchen jede dafür geeignet ist, eine Schraube aufzunehmen, welche in den Kopf der Zylinder (2) geschraubt wird.

3. Einlasskrümmer (3) nach Anspruch 1 oder 2, wobei:
die Schale (18) aus einem oberen Teil (19) und einem unteren Teil (20) besteht, die miteinander verbunden sind;
der untere Teil (20) der Schale (18) direkt mit der Montageplatte (16) verbunden ist und einen unteren Teil des Zulieferkanals (13) aufweist; und
der obere Teil (19) der Schale (18) die erste Einlassöffnung (8) aufweist und einen oberen Teil des Zulieferkanals (13) aufweist.

4. Einlasskrümmer (3) nach Anspruch 1, 2 oder 3, enthaltend einen Drucksensor (31), der zwischen der ersten Einlassöffnung (8) und dem Lufteinlass (14) angeordnet ist.

5. Einlasskrümmer nach einem der Ansprüche von 1 bis 4, wobei die Durchgangsöffnung (26) zu der Bodenwand (25) hin verschoben ist und in der Hälfte des Rohrkörpers (23) angeordnet ist, die näher an der Bodenwand (25) und somit weiter entfernt von der Einlassöffnung (21) liegt.

6. Einlasskrümmer (3) nach einem der Ansprüche von 1 bis 5, wobei das Verhältnis zwischen einer Umfangsabmessung L(3) der Durchgangsöffnung (36) und einer axialen Abmessung L(2) der Durchgangsöffnung (36) im Bereich zwischen 0,4 und 0,5 liegt.

7. Einlasskrümmer (3) nach einem der Ansprüche von 1 bis 6, wobei ein Versatz (T) zwischen der Projektion der Längsachse (A1) des Rohrkörpers (23) und der Längsmittelachse (A2) der Durchgangsöffnung (26) vorliegt.

8. Einlasskrümmer (3) nach Anspruch 7, wobei der Versatz (T) zwischen der Projektion der Längsachse (A1) des Rohrkörpers (23) und der Längsmittelachse (A2) der Durchgangsöffnung (26) gleich 25 % des Durchmessers (D) des Rohrkörpers (23) ist.

9. Einlasskrümmer (3) nach einem der Ansprüche von 1 bis 8, wobei die Hauptdrosselklappe (9) eine einzelne Drosselklappe (27) aufweist, die drehbar angeordnet ist, und eine Betätigungseinrichtung (28), die die Drehung der Drosselklappe (27) veranlasst und außerhalb der Schale (18) angeordnet ist.

10. Einlasskrümmer (3) nach einem der Ansprüche von 1 bis 9, wobei die Verschluss-Drosselklappe (15) eine einzelne Drosselklappe (29) aufweist, die drehbar angeordnet ist, sowie eine Betätigungseinrichtung (30), die die Drehung der Drosselklappe (29) veranlasst und außerhalb der Schale (18) angeordnet ist.

11. Einlasskrümmer (3) nach einem der Ansprüche von 1 bis 10, wobei der Zulieferkanal (13) sich unmittelbar stromabwärts des Lufteinlasses (14) in zwei unterschiedliche Zweigleitungen verzweigt, von welchen jede mit den Verschluss-Auslassöffnungen (10) derselben Bank von Zylindern (2) in Verbindung steht.

## Revendications

1. Collecteur d'admission (3) avec un dispositif d'obturateur pour un moteur à combustion interne (1) muni d'au moins un cylindre (2) ; le collecteur d'admission (3) comprenant :
une chambre d'admission (7), qui est munie d'une première ouverture d'entrée (8), au travers laquelle de l'air frais est délivré dans la chambre d'admission (7), et qui est munie, pour chaque cylindre (2), d'une ouverture de sortie à obturation (10) et d'une ouverture de sortie libre (11), qui délivrent de l'air frais au cylindre (2) ;
une vanne d'étranglement principale (9), qui est disposée en correspondance avec la première ouverture d'entrée (8) et qui ajuste la surface de section transversale de la première ouverture d'entrée (8) ;
un canal d'alimentation (13), qui a pour origine l'intérieur de la chambre d'admission (7) en correspondance avec une admission d'air (14) disposée parallèlement à la première ouverture d'entrée (8) et de façon à faire face à celle-ci, et qui s'achève au niveau de chaque ouverture de sortie à obturation (10) ; et
une vanne d'étranglement à obturateur (15), qui est disposée au niveau de l'admission d'air (14) et qui ajuste la surface de section transversale de l'admission d'air (14) ;
une plaque d'assemblage (16), qui peut être mécaniquement reliée à une tête des cylindres (2), et au travers laquelle les ouvertures de sortie à obturation (10) et les ouvertures de sortie libres (11) sont réalisées de telle sorte que chaque ouverture de sortie à obturation (10) soit disposée au voisinage de l'ouverture de sortie libre correspondante (11) ; et
une enceinte intérieurement creuse (18), qui présente la première ouverture d'entrée (8), qui comprend le canal d'alimentation (13), et qui est fixée à la plaque d'assemblage (16), de façon à délimiter, avec la plaque d'assemblage (16), la chambre d'admission (7) ;
le collecteur d'admission (3) étant **caractérisé en ce qu'**il comprend :
la chambre d'admission (7), étant munie d'une troisième ouverture d'entrée (21), au travers laquelle des gaz d'échappement sont délivrés dans la chambre d'admission (7) ;
la troisième ouverture d'entrée (21), étant disposée entre la première ouverture d'entrée (8) et l'admission d'air (14) ;
la troisième ouverture d'entrée (21), étant reliée à un conduit d'introduction (22), qui s'étend à l'intérieur de la chambre d'admission (7) et qui mène à une zone de la chambre d'admission (7), qui est constituée entre la première ouverture d'entrée (8) et l'admission d'air (14) ;
le conduit d'introduction (22), comprenant un corps tubulaire en forme de cylindre (23), qui, à une extrémité, est relié à l'ouverture d'entrée (21), et, à l'extrémité opposée, est fermé par une paroi inférieure (25) ; et
la surface latérale du corps tubulaire (23), comportant un trou traversant (26), qui, en vue en plan, est de forme rectangulaire et constitue une ouverture d'introduction, au travers laquelle les gaz d'échappement s'écoulent dans la chambre d'admission (7).

2. Collecteur d'admission (3) selon la revendication 1, dans lequel la plaque d'assemblage (16) présente, le long de la périphérie extérieure, une pluralité de trous traversants (17), dont chacun est approprié pour recevoir une vis, qui est vissée dans la tête des cylindres (2).

3. Collecteur d'admission (3) selon la revendication 1 ou 2, dans lequel :
l'enceinte (18) est constituée par une partie supérieure (19) et une partie inférieure (20), qui sont réunies l'une à l'autre ;
la partie inférieure (20) de l'enceinte (18) est directement reliée à la plaque d'assemblage (16) et comprend une partie inférieure du canal d'alimentation (13) ; et
la partie supérieure (19) de l'enceinte (18) comporte la première ouverture d'entrée (8) et comprend une partie supérieure du canal d'alimentation (13).

4. Collecteur d'admission (3) selon la revendication 1, 2 ou 3, et comprenant un capteur de pression (31) qui est disposé entre la première ouverture d'entrée (8) et l'admission d'air (14).

5. Collecteur d'admission (3) selon l'une quelconque des revendications 1 à 4, dans lequel le trou traversant (26) est décalé vers la paroi inférieure (25) et est disposé dans la moitié du corps tubulaire (23) qui est plus proche de la paroi inférieure (25), et, par conséquent, plus loin de l'ouverture d'entrée (21).

6. Collecteur d'admission (3) selon l'une quelconque des revendications 1 à 5, dans lequel le rapport entre une dimension circonférentielle L(3) du trou traversant (26) et une dimension axiale L(2) du trou traversant (26) est compris entre 0,4 et 0,5.

7. Collecteur d'admission (3) selon l'une quelconque des revendications 1 à 6, dans lequel il y a un défaut d'alignement (T) entre la projection de l'axe longitudinal (A1) du corps tubulaire (23) et l'axe médian longitudinal (A2) du trou traversant (26).

8. Collecteur d'admission (3) selon la revendication 7, dans lequel le défaut d'alignement (T) entre la projection de l'axe longitudinal (A1) du corps tubulaire (23) et l'axe médian longitudinal (A2) du trou traversant (26) est égal à 25% du diamètre (D) du corps tubulaire (23).

9. Collecteur d'admission (3) selon l'une quelconque des revendications 1 à 8, dans lequel la vanne d'étranglement principale (9) comprend un élément d'étranglement unique (27), qui est monté de façon à tourner, et un dispositif d'actionnement (28), qui amène l'élément d'étranglement (27) à tourner et qui est disposé à l'extérieur de l'enceinte (18).

10. Collecteur d'admission (3) selon l'une quelconque des revendications 1 à 9, dans lequel la vanne d'étranglement à obturateur (15) comprend un élément d'étranglement unique (29), qui est monté de façon à tourner, et un dispositif d'actionnement (30), qui amène l'élément d'étranglement (29) à tourner et qui est disposé à l'extérieur de l'enceinte (18).

11. Collecteur d'admission (3) selon l'une quelconque des revendications 1 à 10, dans lequel le canal d'alimentation (13) bifurque immédiatement en aval de l'admission d'air (14) en deux branches distinctes, dont chacune communique avec les ouvertures de sortie à obturation (10) d'un même banc de cylindres (2).
